# EUROPEAN PATENT SPECIFICATION

(11) **EP 4 432 220 B1**
(45) Date of publication and mention of the grant of the patent: **08.07.2026**
(21) Application number: 23161757.2
(22) Date of filing: 14.03.2023
(51) Int. Cl.: G06T 7/00, G06T 7/11, G06T 7/174

(54) **ANNOTATION OF SLICE IMAGES IN VOLUMETRIC MEDICAL IMAGES**
ANNOTIERUNG VON SCHICHTBILDERN IN VOLUMETRISCHEN MEDIZINISCHEN BILDERN
ANNOTATION D'IMAGES EN TRANCHES DANS DES IMAGES MÉDICALES VOLUMÉTRIQUES

(43) Date of publication of application: 18.09.2024
(60) Divisional application: 26173754.8
(73) Proprietor: Vietnam National University Ho Chi Minh City, Ho Chi Minh City (VN)
(72) Inventor: LE, Khanh-Duy, Ho Chi Minh City (VN); TRAN, Minh-Triet, Ho Chi Minh City (VN); NGUYEN-HO, Thang-Long, Ho Chi Minh City (VN); PHAM, Minh-Khoi, Ho Chi Minh City (VN)
(74) Representative: Cross, James Peter Archibald

(56) References cited:
- YEUNG PAK-HEI ET AL: "Sli2Vol: Annotate a 3D Volume from a Single Slice with Self-supervised Learning", 21 September 2021, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 69 - 79, XP047611227
- SHI LUYUE ET AL: "A Hybrid Propagation Network for Interactive Volumetric Image Segmentation", 16 September 2022, 20220916, PAGE(S) 673 - 682, XP047633476
- IGLESIAS JUAN EUGENIO ED - LEE SEONG-WHAN ET AL: "Globally Optimal Coupled Surfaces for Semi-automatic Segmentation of Medical Images", 23 May 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 610 - 621, ISBN: 978-3-540-74549-5, XP047416229

## Description

### Field of the Invention

The present invention relates generally to the field of medical imaging, and particularly to improved techniques for annotation of volumetric medical images.

### Background

The rise of AI support in medical healthcare has put a great demand on medical imaging data annotation. Medical imaging data such as 2D images, videos or 3D scanning data with annotations of objects such as organs or tumours has become the essential fuel to develop AI/machine-learning based models to assist doctors or medical practitioners in diagnosis or treatment. Although volumetric medical 3D scanning data provides more information for navigation, exploration and annotation, it requires much more storage space or significantly more powerful computational devices to process and operate. Thus, such volumetric medical image data is typically converted and stored as sequences of 2D images, also commonly referred to as scanning slices or slice images. To provide a holistic view on objects inside a human body, medical imaging processes (e.g., CT or MRI scan) often produce a large number of scanning slices, which in many cases are also stored as video files. Depending the diagnosis and treatment purposes, some or all the slices will be used by medical practitioners for analysis.

Consequently, such sequences of medical scanning slices provide a source of training data for training models. However, in order to create data for training models to assist medical purposes, objects (e.g., organs or tumours) in the medical scanning slices need to be annotated before the respective descriptive features and labels are fed into the training process. Typically, each slice only contains a 2D scan of the object to be annotated, captured at a certain scanning level (e.g., based on the configuration of the source medical scanning device). Therefore, conventional training processes typically utilise all scans of the object across all the slices in order to train the resulting models to be able to recognize the object at different levels. This places a heavy pre-processing burden on annotators who still need to annotate the appearance of the same object in a series of slices.

Generally, annotating an object in a medical image requires the annotator to create a graphical shape overlaid on the top of the image and its boundary should geometrically fit the object of interest. This graphical overlay may be referred to as a mask, an annotation mask or a region of interest. An annotation mask is then associated with a label or identifier, for example based on the name of the corresponding object in the medical image. Visual features of the corresponding object within the region of the annotation mask combined with the mask's label may then be used as training data to train the models to recognize similar objects in the future. Because of this, creating annotation masks that correctly cover the corresponding objects of interest plays the crucial role in assuring the models' accuracy.

Annotating objects (e.g., organs, tumours) in sequential medical imaging data such as a sequence of scanning images or frames in scanning videos (also can be referred to as scanning slices or slices) is laborious due to the large number of scanning slices and the slight visual differences between consecutive slices. Existing approaches to accelerate this process allow annotators to semi-automatically create a geometric mask (a graphical geometry overlaid on the top of the object of interest in the image) fitting the object of interest in a selected slices and then manually refine the shape of this mask to fit the scans of the artefact in other slices. Even though these approaches are more efficient than purely manual annotation, it is still mentally and physically demanding for annotators to adjust the annotation masks across the large number of slices.

For example, to create an annotation mask, manual approaches often require annotators to carefully draw a fine-grained polygon that fits the outline of the object of interest. This is an extremely laborious task, especially with the huge amount of medical data available nowadays, which still keep exponentially increasing. To reduce this workload, there have been approaches to partially automate the mask creating process. A common approach is semi-automatically generating an annotation mask boundary on a single image. The annotation interface allows the user (i.e., the annotator) to coarsely select the object of interest using a rectangular selection tool. The system will automatically determine the fine-grained boundary of the mask on the object of interest based on the visual characteristics (e.g., contrast, edges) of the selected area of the image. However, moving to the next image in the sequence or the next frame in the video, the user still needs to perform the entire procedure again.

Conventional tools may allow the user to duplicate the annotation mask in the current slice for another slice. The user will need to refine the mask to fit the actual shape of the object in the new slice. Although these approaches reduce user effort compared to the purely manual method, they still require the user to perform manual adjustments on every slice, which is still tedious considering the huge amount of medical data to be handled nowadays.

Another conventional approach has been to reduce the frame-per-frame manual work by allowing the user to define a mask for a starting slice and another mask for the same object on an ending slice in the sequence. Then the system will interpolate the masks for the object in intermediate slices in between the two anchor frames. However, as shapes of anatomical objects, especially abnormal ones, often vary across scanning slices without following any specific geometrical rules, such interpolations can easily lead to inaccuracies between the generated masks and the actual shape and/or location of the corresponding object of interest in the slice images.

What is desired are improved technical systems and methods that address at least one of the above technical issues.

"Sli2Vol: Annotate a 3D Volume from a Single Slice with Self-supervised Learning" (YEUNG PAK-HEI ET AL., 2021) discloses segmenting any arbitrary structures of interest (SOI) in 3D volumes by only annotating a single slice (i.e. semi-automatic 3D segmentation).

"A Hybrid Propagation Network for Interactive Volumetric Image Segmentation" (SHI LUYUE ET AL., 2022) discloses a slice propagation network (denoted as SPN) for transferring user hints to adjacent slices to guide the segmentation slice-by-slice and a volume propagation network (denoted as VPN) for propagating user hints over the entire volume in a global manner and providing spatial-consistent features to boost slice segmentation.

"Globally Optimal Coupled Surfaces for Semi-automatic Segmentation of Medical Images" (IGLESIAS JUAN EUGENIO ED - LEE SEONG-WHAN ET AL., 2022) discloses a method to compute a set of discrete minimal surfaces whose boundaries are specified by user-provided segmentations on one or more planes.

### Summary of the Invention

The present invention is set out in the accompanying claims.

According to one aspect of the invention, there is described a method for determining a region of interest within slices of medical volumetric image data, the method comprising acquiring medical volumetric image data including a sequence of slice images and information defining relative positional information therebetween; determining features values of an input slice of the medical volumetric image data, based on image data of the input slice and positional information to one or more neighbouring slices relative to the input slice; and applying the determined feature values to a trained machine learning model to generate an output indicative of a predicted region of interest in the, or each, neighbouring slice relative to the input slice.

The region of interest may define an annotation mask of the visible object in a respective slice image. The relative positional information comprises a position of each slice in the sequence and/or a distance between each slice to a neighbouring slice in the sequence.

The output of the trained machine learning model may indicate a shape of the region of interest in the neighbouring slice. The neighbouring slices may be forward and/or backward in the sequence relative to the input slice.

The method may further comprise detecting a visible object in the input slice, and retrieving a trained machine learning model corresponding to the detected visible object. The trained machine learning model generates a further output indicative of the region of interest in the input slice.

The method may further comprise automatically annotating the volumetric medical image data based on the output of the trained machine learning model. A confidence value of the predicted region of interest may be determined.

The method further comprises generating a prompt to an operator upon predicting a region of interest, and in response to user input; receiving user input to modify the predicted region of interest; and re-training the machine learning model based on the modified region of interest.

The method may further comprise determining a plurality of target slices of the medical volumetric image data, and applying feature values of each target slice to the trained machine learning model to generate respective outputs indicative of a predicted region of interest in the, or each, neighbouring slice relative to the respective target slice.

In other aspects, there are described apparatus and systems configured to perform the described methods. In a further aspect, a computer program is described, comprising machine readable instructions arranged to cause a programmable device to carry out the described methods.

### Brief Description of the Drawings

There now follows, by way of example only, a detailed description of embodiments of the present invention, with references to the figures identified below.
Figure 1 is a block flow diagram showing the main components of a data processing system according to an embodiment.
Figure 2 is a flow diagram illustrating an exemplary method of training a machine-learning model to automatically predict annotation masks of a detectable biological/anatomical object in volumetric medical slice images.
Figure 3A is a block-flow diagram schematically illustrating an example of the overall flow of the model training process. Figure 3B illustrates an example of mask prediction by an exemplary model.
Figure 4 is a flow diagram illustrating an exemplary method of automatically annotating objects in volumetric medical images according to an embodiment.
Figure 5, which comprises Figures 5A to 5G, schematically illustrates exemplary display screens output by the system via the user interface as shown in Figure 1.
Figure 6 is a block-flow diagram schematically illustrating an example of the annotation mask prediction process by the annotation mask predictor of the image annotator.
Figure 7 is a flow diagram of an exemplary process to semi-automatically propagate an object's mask to other slices in the volumetric medical image data.
Figure 8, which comprises Figures 8A to 8C, schematically illustrating further exemplary display screens output by the image annotator.
Figure 9 is a diagram of an example of a computing device on which one or more of the functions of the embodiments may be implemented.

### Description of Embodiments

An automatic machine-learning based medical image processing algorithm may be employed to enable efficient annotations of detectable objects, such as organs, in sequential slices of volumetric medical images. Machine learning models may be implemented to leverage the visual similarities and spatial proximity between consecutive scanning slices combined with optional instructive input from the user given through the interfaces to automatically determine predicted mask boundaries of the objects in each slice with measurable levels of confidence. The predicted annotation masks of one or multiple objects in a slice may be automatically propagated to other slices in the sequence. The automatically determined masks can be adjusted by the user and can be used by the machine learning models to update the propagation of the object masks across other slices in the sequence. In each slice, the system can keep track of various versions of predicted masks as automatically generated for each object scan and provide them as a list on the interface where the user can select the most suitable one for precisely annotating the object in the scanning slice.

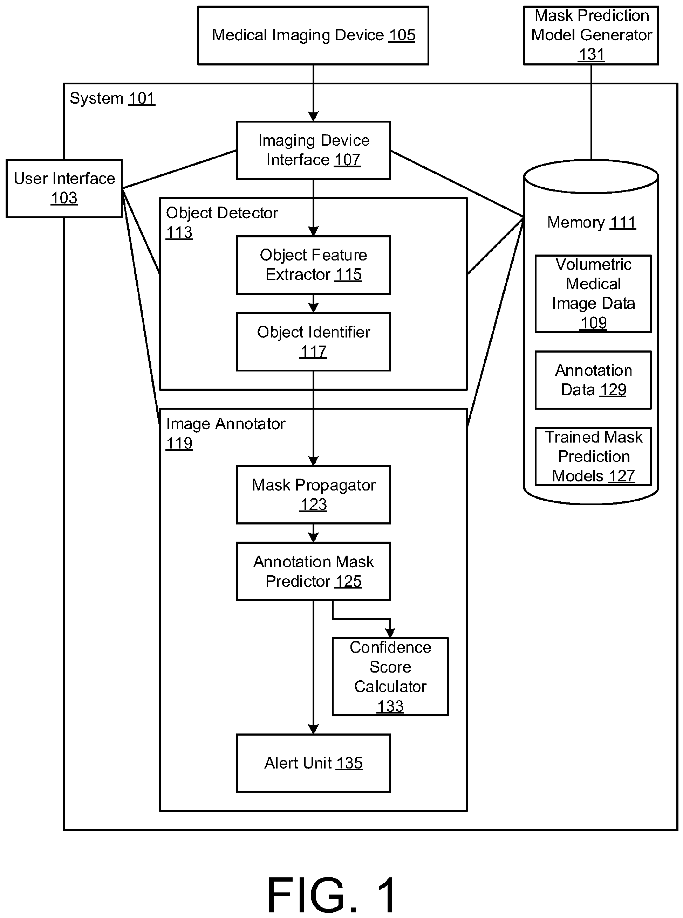

Figure 1 illustrates a system 101 configured to automatically analyse and annotate medical image data. As shown, in an exemplary implementation, the system 101 is configured to receive medical images and display the medical images on user interface 103. The medical images may be captured by a medical imaging device 105 and received via an imaging device interface 107. The system 101 may also be configured to retrieve captured medical images from an external storage medium and/or database.

The medical imaging device 105 is configured to capture and provide volumetric medical image data 109 including visible biological features within a 3D capture volume, for example as a series of two-dimensional, spatially-related slice images through the 3D capture volume, or as three-dimensional volumetric (voxel) data. The medical imaging device 107 may provide volumetric medical image data 109 of any modality depending on the implementation context, such as magnetic resonance imaging (MRI), computed tomography (CT), ultrasound (US), optical coherence tomography (OCT), X-ray, or the like. The volumetric medical image data 109 may be stored in memory 111 for processing by one or more processing modules of the system 101. The memory 111 may include a random access memory, a hard drive, a flash memory, or any other storage medium including removable storage medium, or combination of such storage means. Alternatively, processing modules of the system 101 may be embedded into, or integrated with, the medical imaging device 107.

The system 101 includes an object detector module 113 configured to perform image processing to automatically analyse an input medical slice image and detect the presence of one or more biological/anatomical objects in the image. The object detector module 113 may include an object feature extractor module 115 to extract a predefined representation of visual features of corresponding object(s) in the input slice images, based on visual characteristics of the input image data, such as contrast, colour distributions, edges, etc. The visual features may include data defining a boundary of the detected object in the slice image, the boundary corresponding to annotation mask of the object. The object feature extractor 115 may implement any suitable methods and systems for image based feature extraction. An object identifier module 117 of the object detector module 113 may be configured to determine a corresponding identifier or label of the object (or objects) based on the extracted features. The object identifier module 117 may use the trained mask prediction models 127 to identify an object based on an input boundary feature, for example.

An image annotator module 119 is configured to automatically generate annotation information for a series of slice images of the volumetric medical image data 109. For example, the object detector module 113 may be used to determine a seed object (and corresponding annotation mask) from an initial one of the slice images of the volumetric medical image data 109. A mask propagator module 123 of the image annotator 119 is configured to identify remaining target slices of the volumetric medical image data 109 for subsequent processing, to automatically and accurately determine annotation masks of the seed object in the remaining target slices. The target slices are provided to an annotation mask predictor module 125 of the image annotator 119 that is configured to use a plurality of machine-learned models (or algorithms) 127 to determine the corresponding annotation masks of other instances of the seed object in the target slices. The annotation mask predictor 125 may implement a machine-learned model or algorithm that is trained to classify, detect and/or predict the shape and location of an annotation mask of a defined object in an input slice image, as well as in one or more adjacent slice images of the volumetric medical data such as a preceding and/or subsequent neighbouring slice image relative to the input slice image. Object parameters of the detected objects within each slice image, such as object identifier or label, location in each slice images and/or corresponding identified annotation mask (object boundary), may be stored as annotation data 129 in the memory 111.

A mask prediction model generator module 131 is configured to train the model 123 to predict the corresponding object annotation masks across a plurality of spatially adjacent slice images of the volumetric medical image data 109, for example based on training data instances of spatially-related medical slice images and associated annotation masks of detectable objects therein. The parameters of the trained mask prediction models 127 may be stored in memory 111 for retrieval and use by the annotation mask predictor 125. The mask prediction model generator 131 may be implemented in system 101. Alternatively or additionally, the mask prediction models 127 may be pre-trained by a model generator 131 at a remote server and transmitted to the system 101, for example via a computer readable medium or a data network (not shown).

The annotation mask predictor 125 may be configured to store the predicted annotation masks of the corresponding object as updated versions of the annotation data 129 in memory 111. Confidence score calculator 133 may be configured to calculate and store a confidence score or measure of each predicted annotation mask, for example based on the output from the annotation mask predictor 125. The annotation mask predictor 125 may also be configured to generate a prompt via the user interface 103 to an operator of the system 101 and/or medical imaging device 105, for example upon predicting a mask, to receive confirmation from the operator of predicted mask accuracy and/or to corrections or adjustments to the predicted masks.

The system 101 may include an alert unit 135 for generating an alert to an operator of the system 101 and/or medical imaging device 105, for example upon propagating the object mask throughout the sequence of slices. The alert may comprise an audible and/or visible signal, for example output by the user interface 103 to alert the user to a predicted annotation mask that has low confidence score, or alerting the user to a predicted annotation mask that has a higher confidence score than a previously determined mask, thereby reducing errors in the annotation process.

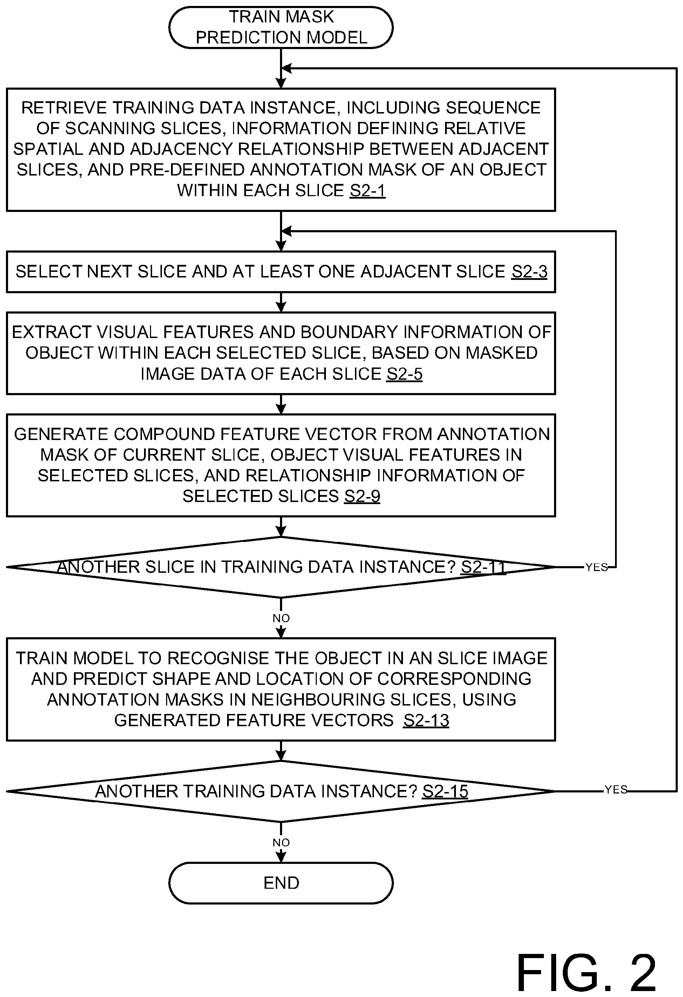

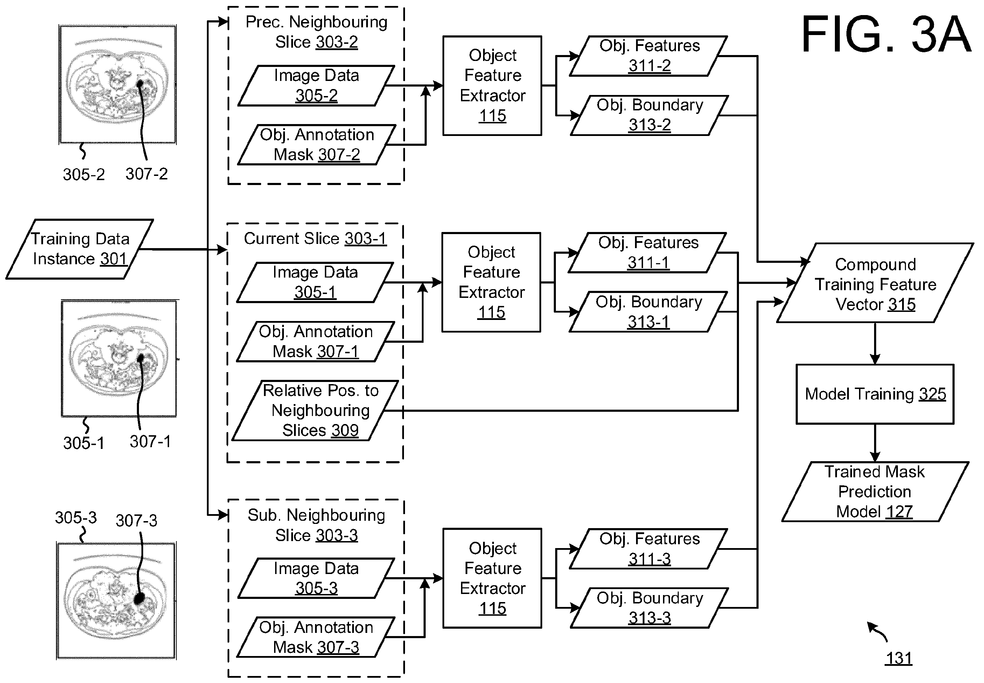

Figure 2 is a flow diagram illustrating an exemplary method of training a machine-learning model to automatically predict annotation masks of a detectable biological/anatomical object in volumetric medical slice images. Reference is also made to Figure 3A, which is a block-flow diagram schematically illustrating an example of the overall flow of the model training process. As shown, the process may begin at step S2-1 where the model generator 131 retrieves a training data instance 301, for example from predefined training data stored in memory 111. In this exemplary embodiment, the training data includes instances of pre-annotated volumetric medical image data 109, each comprising a sequence of slice images 303 that together define the capture volume of a training data instance 303. Each slice image 303 includes image data 305 at a respective slice location through the volumetric medical image, and one or more predefined annotation masks 307 each corresponding to a respective visible object captured in the image data 305 of the slice image 303.

Each slice image 303-1 is spatially-related to at least one neighbouring slice 303-2,303-3 in the sequence. The neighbouring slices 303-2,303-3 can be one or more slice images spatially forward and/or backward in the volumetric medical image data 109 of the training data instance 301, relative to the current slice image 303-1. The volumetric medical image data 109 from the medical imaging device 105 may include relative positional information 309 of each neighbouring slice, defining the relative spatial and adjacency relationship between each pair of adjacent, neighbouring slices 303-1. For example, the relative positional information may include one or more features such as a normalized position of each slice in the sequence (e.g. computed as the position of the slice in the sequence divided by the sequence length), and an absolute physical distance between that slice and a preceding and/or subsequent neighbouring slice in the capture volume (e.g. as defined by the size of the corresponding scanning step between slice images captured by the medical imaging device 105).

At step S2-3, the model generator 131 selects an initial tuple of neighbouring slices of the training data instance 301, the tuple including an initial current slice image 303-1 and at least one neighbouring slice 303-2,303-3. In the example shown in Figure 3A, each exemplary iteration of the training process takes a tuple of three neighbouring imaging slices 303 from the training data instance 301: a current slice image 303-1, the preceding neighbouring slice 303-2 relative to the current slice, and the subsequent neighbouring slice 303-3 relative to the current slice. As those skilled in the art will appreciate, the tuple may include a single neighbouring slice (e.g. preceding or subsequent), or may include additional neighbouring slices, such as the next two subsequent neighbouring slices, with the relative positional information 309 defined accordingly.

At step S2-5, the model generator 131 determines representations of the visual features and the boundary of the object within each slice, based on the image data 305 of each selected slice. For example, the model generator 131 may use the object feature extractor 115 to determine a set of object features 311 that represent respective visual characteristics of the object, and data defining a boundary 313 of the object, based on the image data 305 of each slice image 303. Preferably but not necessarily, the model generator 131 may provide a masked portion of the image data 305 of each slice image 303 to the object feature extractor 115, based on the respective pre-defined annotation mask 307 of the object within the respective slice 303 of the training data instance 301. Advantageously, the object features and boundary are thereby extracted from masked image pixel values corresponding to the object itself, resulting in a more accurate representation of the visual characteristics of the object.

At step S2-9, the model generator 131 generates a compound training feature vector 315 representing the selected neighbouring slices of the current tuple. The training feature vector 315 includes values representing the extracted visual features of the object in each of the selected slices of the tuple, and the relative positional information between the current 303-1 and neighbouring slices 303-2,303-3 of the tuple.

As an example, each slice-tuple feature vector 315 may be a compound feature vector including a *RelativePositionToReferenceSlice* feature, a value for a *AbsoluteScanningDistanceBetweenSlices* feature, a value for a *TypeOfObjectMaskRepresentation* feature, a value for a *RepresentationOfObjectMask* feature, and a value for a *ExtractedFeaturesFromSelectedObject* feature. The *RelativePositionToReferenceSlice* feature may represent a normalized order of the current slice instance to a neighbouring reference slice of the tuple. For example, if the current slice is after the reference slice, this relative position value may be a positive number. Likewise, if the current slice is before the reference slice, the relative position value may be negative. Furthermore, the relative position value may be determined based on the total number of slices in the volume. For example, if the entire volume has 100 slices, the current slice is right before the reference slice, then the relative position value of the current slice instance immediately preceding the reference slice in the tuple may be defined as -0.01.

The *AbsoluteScanningDistanceBetweenSlices* feature may be a floating-point number representing the scanning distance between two slices in millimeters. The *TypeOfObjectMaskRepresentation* feature may indicate how the mask of the selected object is represented in this feature vector instance. For example, a 0 value may indicate a polygon-based representation of the mask's shape, and a 1 value may indicate a binary-mask representation. The *RepresentationOfObjectMask* feature may represent characteristics of the mask of the selected object in the current frame, depending on the type of mask indicated by the *TypeOfObjectMaskRepresentation* value.
For example, a polygon-based mask may be represented as an ordered set of points defining a boundary enclosing the object of interest, such as [[x1,y1][x2,y2]...[xN,yN]], where N is the number of points. Each point may be expressed by two normalized coordinates respective to the horizontal and vertical dimension of the scanning slice. The size of this chunk of information may be dynamic, depending on the number of anchor points constructing the boundary. A binary-mask may be represented as a matrix having the same dimensions to the corresponding scanning slice, where each binary value in the matrix indicates if the corresponding pixel in the scanning slice belongs to the selected object (for example represented as 1) or not (for example represented 0). For example, the object mask may be represented as an N by M matrix of binary values, where N and M are the respective dimensions of the scanning slice. The matrix can be represented as a 1-dimensional array in the compound feature vector, for example by concatenating the rows of values. The *ExtractedFeaturesFromSelectedObject* feature may represent characteristics of a visual description of the pixels within the selected object. For each pixel, a corresponding visual description may include a list of several sub-vectors, each sub-vector including values defining a respective description, such as colour of the pixel, colour(s) of four or eight surrounding pixels, histogram of oriented gradient around the pixel, etc.

At step S2-11, the model generator 131 determines if there is another tuple of slices 303 in the training data instance 301 to be processed, and returns to step S2-3 to select the next tuple of neighbouring slices 303 if available. On the other hand, when it is determined that all tuples of neighbouring slices 303 from the training data instance 301 have been processed, then at step S2-13, the compound training feature vector 315 may be passed to the model training module 325 to iteratively re-train the model 123 based on the current training data instance. In this way, for each scanning slice 303, the boundary information of the object of interest combined with the boundary information of the object in a number of neighbouring scanning slices relative to the current slice, together with the relative positional information of these neighbouring slices will be fed into the process as training data for the model.

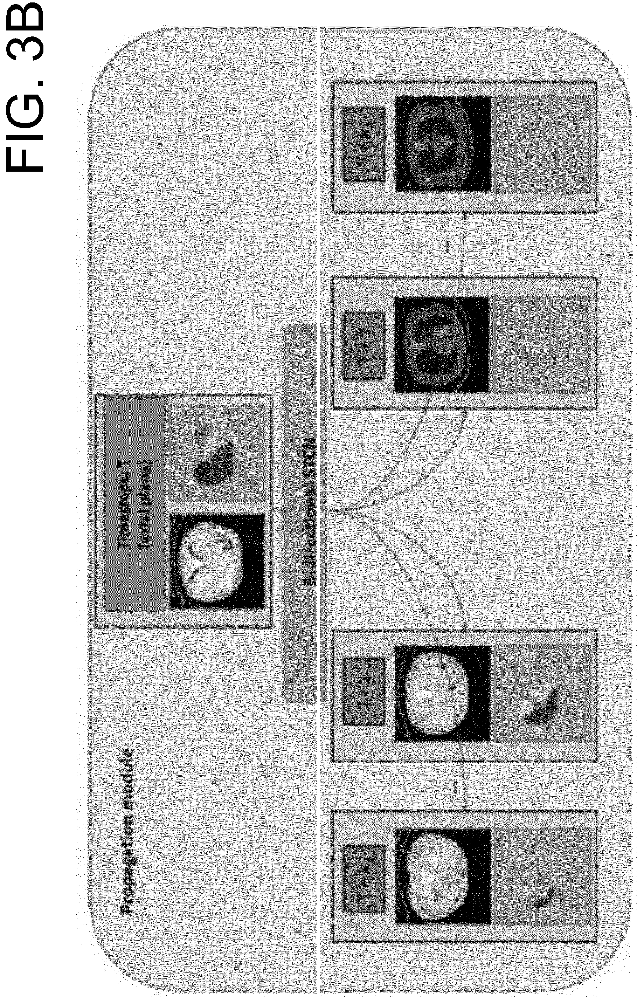

As an example, the model 123 may be implemented based on a bidirectional Stochastic Temporal Convolutional Network (STCN), for example as schematically illustrated in Figure 3B, configured for mask prediction where the structures of the input and output vectors are defined such that boundary information of the object masks in training data can tightly impact the prediction accuracy. The output predicted mask may be represented as a binary mask, with dimensions based on the corresponding scanning slice encapsulated in a vector. The output vector may include an array of binary values, constructed from the matrix representing the object mask, where each binary value in the matrix indicates whether or not the corresponding pixel in the scanning slice belongs to the object of interest.

Referring to Figure 3B, in an exemplary mask prediction stage using the model 123, the boundary information of the selected object in a reference slice, and visual features of enclosed pixels within the boundary may be extracted and fed into the model 123 as a reference for predicting the object's mask in neighbouring slices. In each neighbouring slice, the model 123 may take into account the relative position of the current slice to the reference slice, and start processing all pixels of the current slice. At each pixel of the current slice, the coordinate and visual features of the pixel may be fed into the model 123, together with the boundary and visual information extracted from the reference slice. The boundary information and visual appearance of the object of interest in the reference slice may represent approximate information of the object's pixels in neighbouring slices based on the training data.

The model 123 may thereby process the input values to compute the likelihood of the pixel being a part of the object of interest. For each pixel in an input neighbouring slice with a known position relative to the reference slice, the trained (or partially trained) model 123 may effectively compare the input pixel position and visual features to the corresponding aspects represented within the trained model 123, in order to determine if the input pixel is likely to be a part of the object of interest. This likelihood will also serve as the prediction confidence score of each pixel. If this likelihood score is higher than a predefined threshold, the pixel will be considered to belong to the object and its correspondence in the mask may be set to 1, and otherwise to 0. As the prediction result of each pixel depends on the correlation/proximity of its location and visual appearance to those in the model 123, it may be optimised if the boundary in the input compound vector accurately encloses the object of interest. For example, it is preferable although not required that the boundary tightly fits the object of interest, to minimise inclusion of visual features of irrelevant pixels from areas outside the object that may otherwise result in noise in the training data and a less accurate prediction model.

At step S2-15, the model generator 131 determines if there is another instance of training data to process, and processing returns to step S2-1 to retrieve and process the next training data instance 301, until all of the training data has been processed and the machine-learned parameters of the fully trained mask prediction models 127 are stored in memory 111. With this training approach, the trained mask prediction models 127 can be used to determine an annotation mask of the object in a new slice image based on the image data itself, as well as predict the shape of the object (and hence the corresponding annotation mask) in neighbouring scanning slices. By taking into account the relative spatial relationship of an object's appearance in consecutive scanning slices, mask prediction using the resulting machine-learned model is more accurate and efficient in automatically determining the annotation mask of the object across sequential scanning slices, particularly compared to conventional approaches that treat each scanning slice as an independent image from its neighbours.

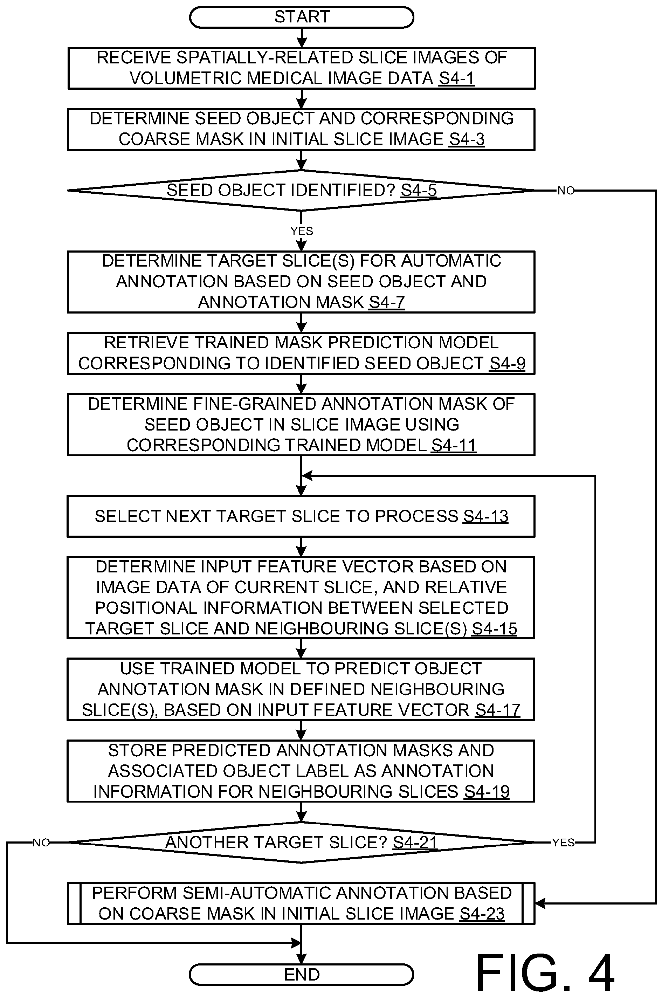

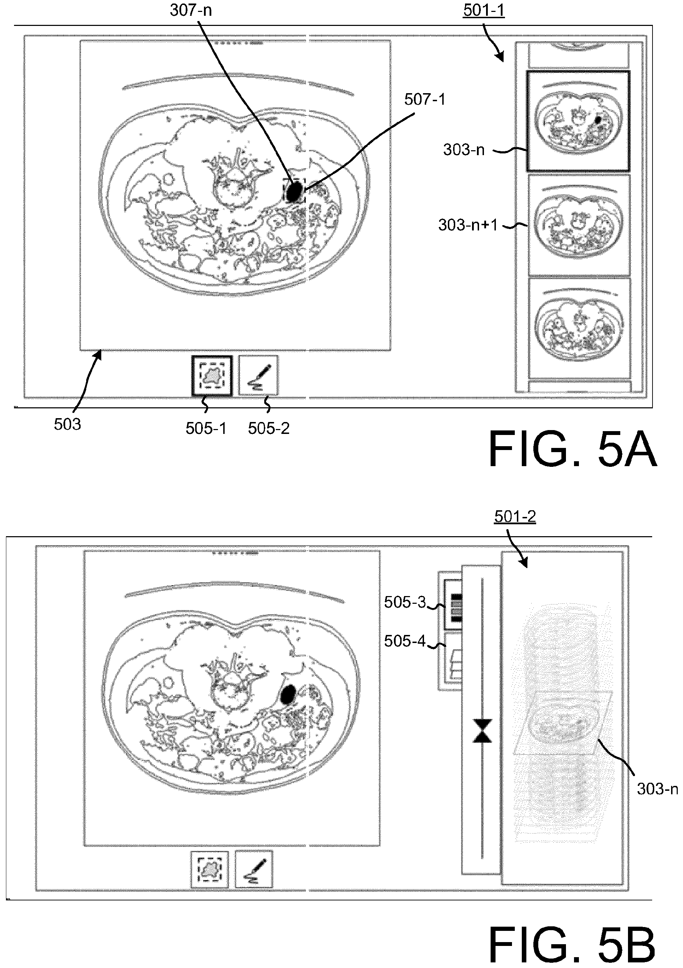

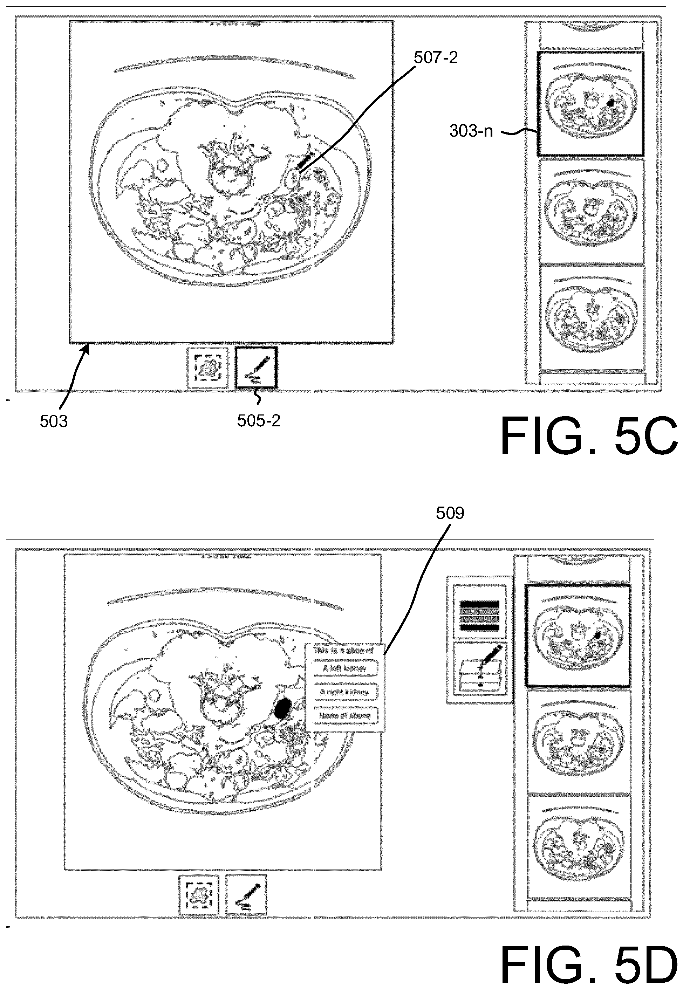

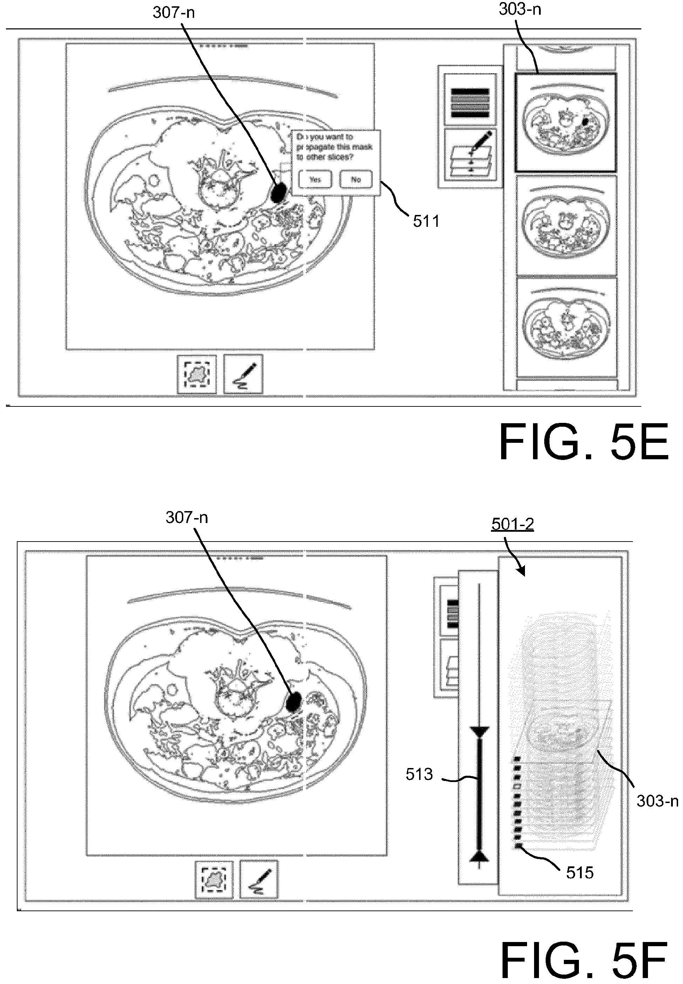

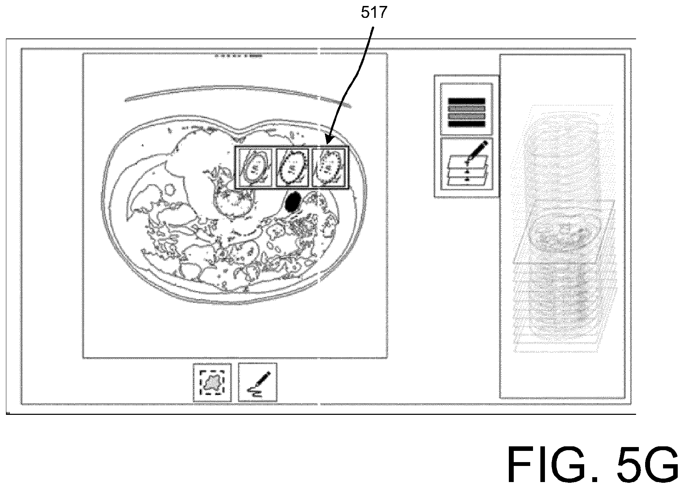

Figure 4 is a flow diagram illustrating an exemplary method of automatically annotating objects in volumetric medical images, performed by processing modules of the system 101. Reference is also made to Figure 5, which comprises Figures 5A to 5G, schematically illustrating exemplary display screens output by the system 101 via the user interface 103. As shown in Figure 4, the process may begin at step S4-1 where the imaging device interface 107 receives and stores volumetric medical image data 109 in memory 111. In this exemplary embodiment, the volumetric medical image data 109 comprises two-dimensional, spatially-related slice images 303 through a 3D capture volume. The image annotator 119 may display, via the user interface 103, the sequence of slice images 303 and receive input from the user (i.e. an operator of the system 101) to initiate different operations in the annotation process.

For example, referring to the exemplary display screen shown in Figure 5A, after the volumetric medical image data 109 is imported into the system 101, a sequence of slice images 303 may be shown as an interactive list 501 of images on the interface 103. The list 501 of images may include lower resolution versions of each slice image 303. When a slice 303-n in the list is selected, a higher resolution version 503 of the selected slice 303-n may be shown in a predefined area of the interface 103. The system 101 may be configured to provide an adaptive interface 103 for displaying the list of slices 501. For example, depending on the annotation task the user may need to perform on the selected slice 303-n or slice list 501, the interactive list 501 may dynamically display the slices 303 as a 2D list 501-1 of user-selectable images, for example as shown in Figure 5A, or as a 3D stack 501-2 of user-selectable images as shown in Figure 5B. A corresponding plurality of suitable interactive elements 505 may also be displayed by the interface 103, depending on the tasks 505-1,505-2 and/or view modes 505-3,505-4 available to the user.

At step S4-3, the object detector 113 performs image processing to determine a seed object and a corresponding coarse mask of the seed object in an initial slice image of the volumetric medical image data 109. In one exemplary implementation, the object detector 113 may receive a user selection of a slice image 303-n from the displayed list 501 of slice images. The object detector 113 may receive user input to define a coarse annotation mask of the intended seed object in the selected slice image 303-n. For example, as schematically illustrated in the display screen of Figure 5A, the user can select and use an area selection tool 505-1 to coarsely draw a boundary 507-1, such as a rectangle, circle, square, oval or freeform shape, around the object of interest in the displayed higher resolution version 503. The coarse annotation mask may be defined by the region of image pixels within the area boundary 507-1. Alternatively or additionally, the user can select and use a scribble tool 505-2 to draw a scribbling line over and/or around the object of interest in the displayed higher resolution version 503, as schematically illustrated in the display screen of Figure 5C. In this case, the coarse annotation mask may be defined by the image pixels under the scribbling line.

At step S4-5, the object detector 113 determines if the seed object from step S4-3 can be identified. The object detector 113 may perform image processing on the masked region of image pixels defined by the coarse annotation mask, to determine the presence of one or more candidate seed objects in the masked region of the selected image slice. For example, the object feature extractor 115 may be used to extract a representation of visual features of a candidate seed object in the masked image data of the selected image slice. The extracted features may be passed to the object identifier 117 to determine, using the trained models 127, an identifier or label of the seed object in the masked region. Optionally, the object detector 113 may be configured to identify a plurality of possible matching candidate labels, and to prompt 509 the user to select the correct label for the detected object via the user interface 103, for example as shown in the exemplary display screen of Figure 5D. The prompt 509 may also include an option for the user to indicate that none of the identified object label(s) is correct, whereupon the system 101 may be configured to terminate the automatic annotation process. Optionally, the object detector 113 may be configured to enable the user to provide input, via the interface 103, to label the detected object. The system 101 may update the trained models 127 based on the user input.

In response to detecting and identifying the seed object and corresponding annotation mask 307-n in the initial selected slice 303-n, the system 101 may be configured to automatically annotate the remaining slices of the volumetric medical image data 109 based on a predicted location of the seed object annotation mask propagated between adjacent, neighbouring slices. The image annotator 119 may prompt 511 the user, via the user interface 103, to initiate processing to propagate the seed object's current mask in the selected initial slice to other target slices in the sequence, for example as shown in the exemplary display screen of Figure 5E.

Accordingly, at step S4-7, the mask propagator 123 determines one or more target slices of the volumetric medical image data 109 to be processed for automatic propagation of the seed object's annotation mask in the initial slice. For example, the mask propagator 123 may select all remaining slice images of the volumetric medical image data 109 (apart from the initial selected slice 303-n), or all remaining slice images where the seed object is not yet annotated, as target slices for automatic mask propagation. Alternatively, the mask propagator 123 may receive user input selection of one or more target slice images via the user interface 103. The system 101 may dynamically switch to rendering the list of images as a 3D stack of images 501-2, for example as shown in Figure 5F, in order to allow the user to more easily specify a range of target slice images 303 for automatic mask propagation. The user interface 103 may include an interactive navigation tool, such as a two-anchor selection slider 513, allowing the user to quickly specify a range of target slices from the 3D stack of slice images 501-2 where the mask propagation should be applied. The system 101 may also automatically configure the spacing between the displayed slices in the stack 501-2 so that the stack fits the height and/or width dimensions of the display screen, reducing the need of scrolling for users.

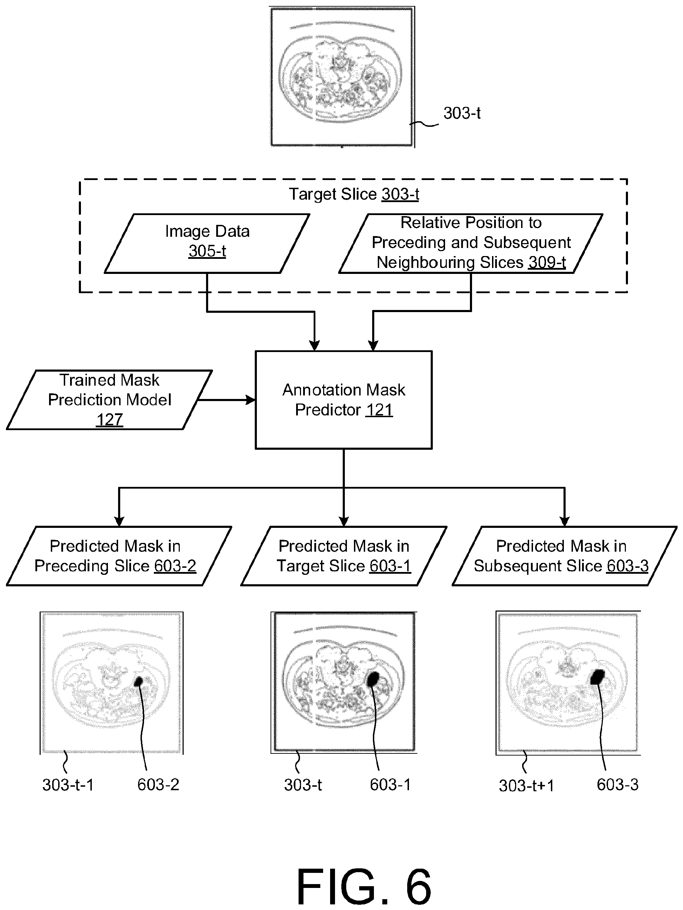

At each target slice, the image annotator 119 uses the pre-trained mask prediction models 127 to efficiently and accurately predict the location and shape/boundary of the seed object in one or more neighbouring slices. As those skilled in the art will appreciate, the mask prediction outputs may be based on the data structures used in training of the models, such as the number of neighbouring slices defined in the generation of the compound feature vector structure as discussed above. Accordingly, at step S4-9, the mask propagator 123 of the image annotator 119 retrieves the corresponding trained mask prediction model 127 of the identified seed object. At step S4-11, the mask propagator 123 may use the trained mask prediction model 127 to determine the shape and location of the seed object in the initial slice image 303-n, for example based on the image data of the initial slice image 303-n as inputs to the retrieved trained model 127. Figure 6 is a block-flow diagram schematically illustrating an example of the annotation mask prediction process by the annotation mask predictor 121 of the image annotator 119, using a trained model 127 as discussed above with reference to Figure 3A.

At step S4-13, the mask propagator 123 selects the next target slice 303-t to process for annotation mask prediction, this being the first one of the target slices determined at step S4-7 the first time the process is executed. As shown in the example of Figure 6, the annotation mask predictor 121 receives data associated with a current target slice 303-t, including corresponding image data 305-t from the volumetric medical image data 109, and relative position information 309-t defining the relative spatial and adjacency relationship between the current target slice 303-t and the preceding and subsequent neighbouring slices 303-t-1,303-t+1.

At step S4-15, the annotation mask predictor 125 may determine an input feature vector representing the current target slice 303-t, based on the input data structure defined by the trained mask prediction model 127. For example, the input feature vector of the target slice 601 may be determined based on feature data extracted from the image data 305-t of the current target slice 303-t by the object feature extractor 115, and the relative positional information 309-t between the current target slice 303-t and the defined neighbouring slices 303-t-1,303-t+1. At step S4-13, the annotation mask predictor 125 uses the retrieved mask prediction model 127 to predict an annotation mask 703-1 of the seed object instance in the current target slice image 303-t, as well as a respective predicted annotation mask 603-2,603-3 of the seed object instance in each defined neighbouring slice 303-t-1,303-t+1.

At step S4-19, the annotation mask predictor 125 may store the predicted annotation masks and associated object identifier or label as updated annotation data 129 for the current selected target slice and the defined neighbouring slices, in memory 111. Optionally, a confidence score calculator 133 may be configured to calculate a confidence score of each generated annotation mask, for example based on the outputs of the annotation mask predictor 125. As an example, the confidence score may be calculated based on the average of the prediction confidence scores of all the pixels which are predicted to belong to the object of interest. As described above, the prediction confidence score of each pixel in the current slice may be the likelihood that the pixel belongs to the object determined by the model based on the slice's relative position to the reference slice, the pixel's location and visual features. The system 101 may be configured to output an indicator to alert the user of predicted annotations masks that do not meet predefined threshold confidence score, for example via the alert unit 135. Confidence levels of the generated masks may also be visualized on the corresponding slice images output by the user interface 103, which allow the user to quickly determine slices where adjustment or re-generation of the annotation masks may be needed. For example, as shown in Figure 5F, the image annotator 119 may render an indicator 515, such as a coloured square on or adjacent each slice image 303 having an automatically determined annotation mask. Each indicator 515 may be configured to indicate the relative confidence scores of the annotation mask propagated to the corresponding slice.

At step S4-21, the mask propagator 123 determines if there is another target slice to process, and processing returns to step S4-13 to select the next target slice 303-t, until all of the determined target slices from step S4-7 have been processed and the corresponding annotation data 129 updated in memory 111.

Optionally, the image annotator 119 may be configured to provide interface elements enabling the user to adjust and correct the shape and/or location of a predicted annotation mask in a selected slice image. In response to correcting an automatically generated mask of the seed object in this way, the system 101 may also be configured to re-propagate the corrected mask in order to automatically update the annotation masks of the seed object in other scanning slices based on the user-corrected mask, thereby propagating the correction to other slices without requiring further input from the user. Similarly, when the neighbouring slices are updated with corrected masks, a similar process may be applied to continue the re-propagation to adjacent slices of those neighbouring slices. After the automatic re-propagation process, the user may review any new or remaining mask generation low confidence scores represented on the user interface 103, to determine if further corrections may be required.

For each scan of the object in each slice, the image annotator 119 may keep track of all the mask versions automatically generated. Consequently, as shown in Figure 5G, the image annotator 119 may also provide a user interface element 517 for the user to browse a plurality of versions of predicted masks generated for the seed object in a selected slice, and to choose a closest or most accurate mask to be assigned to the object in the annotation data 129. Advantageously, the system 101 may be configured in this way to significantly reduce the user's time and effort in otherwise manually inspecting and correcting the generated masks.

After adjustments are made to a mask as discussed above, the system 101 may be further configured to update the corresponding trained model 127 to take into account the user-input adjustments. For example, the model generator 131 may be configured to determine a new compound training feature vector 315 based on image data within the corrected annotation mask and re-train that model 127 using the new compound training feature vector 315. Alternative or additionally, the image annotator 119 may be configured to receive user input to approve an annotation, for example once the user is satisfied with the created masks, and in response, to trigger the system to perform re-training of the model 127.

Referring back to step S4-5, if the seed object cannot be automatically identified by the image annotator 119 (or if the object detector 113 does not detect the presence of any candidate seed object in the input image data), then the automated annotation process may be terminated. Alternatively, the image annotator 119 may be configured to determine a fine-grained annotation mask of the seed object in the selected slice image, based on the masked image data of the selected slice image defined by the coarse annotation mask. For example, the mask propagator 123 may be configured to perform image processing of the coarse masked image data to determine the fine-grained boundaries around the candidate seed object, using a conventional algorithm to determine an object shape and location based on the visual characteristics of the pixel values in the masked region, such as contrast, colour distributions, detected edges, etc. In the case of the scribble tool input, the object detector 113 may extract the visual features of the pixels under the scribbling line and iteratively find all similar neighbouring pixels until the object boundary is determined. The corresponding fine-grained annotation mask of the seed object may be defined by the resulting area of pixels under the scribbling line and similar neighbouring pixels.

In this alternative implementation, once the fine-grained mask of the seed object of interest is determined, the object detector 113 may be further configured to perform another recognition process, based on the masked region of image pixels defined by the fine-grained annotation mask, to determine the identity of the seed object, for example using the trained mask prediction models 127. In this way, the system 101 is configured to advantageously avoid mis-recognition results at previous step S4-5 due to visual disparities between the initial coarse masked image data and the pre-trained models 127. The automated annotation process may be terminated if the object detector 113 is still unable to identify the detected seed object in the input image data. Optionally, the object detector 113 may be configured to prompt the user for input to label the detected object.

In this way, a system and method are provided that take into account not only the visual characteristics of an anatomic object's scans but also the spatial relationship between neighbouring scanning slices to develop a system to efficiently assist users in annotating sequential medical images or medical videos of volumetric scanning data.

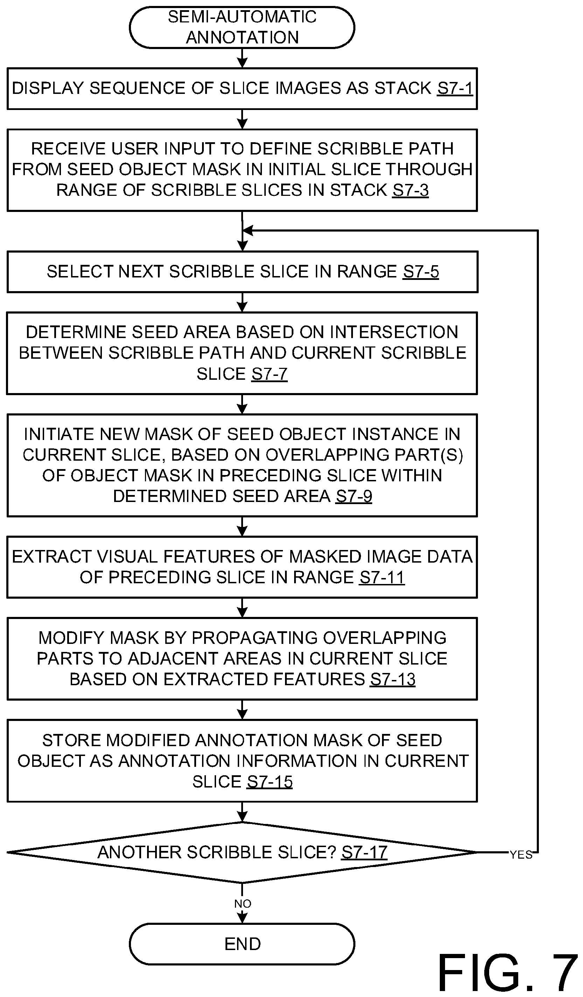

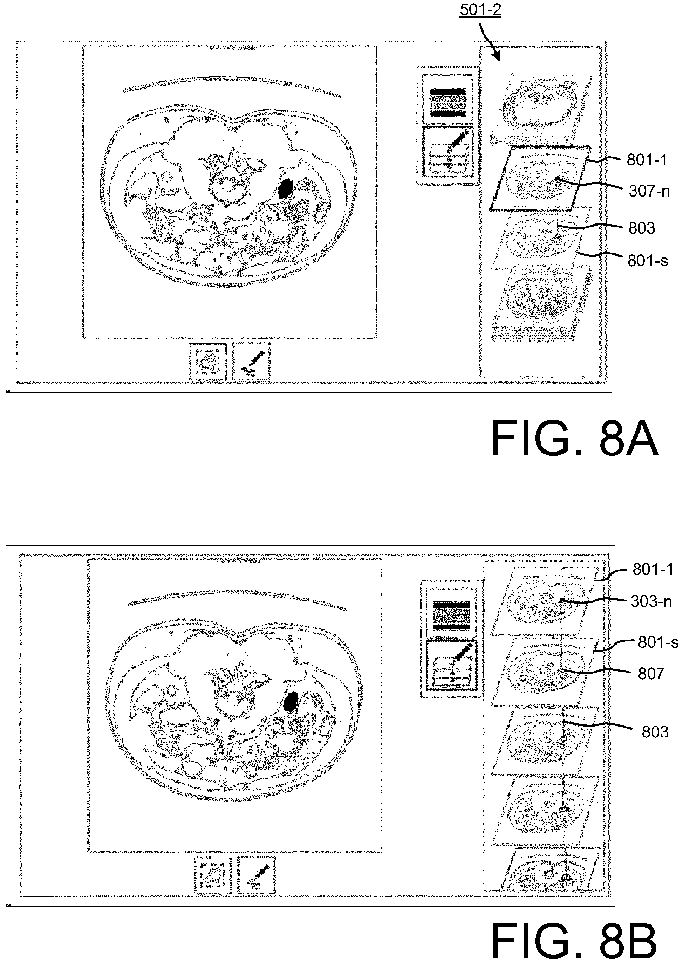

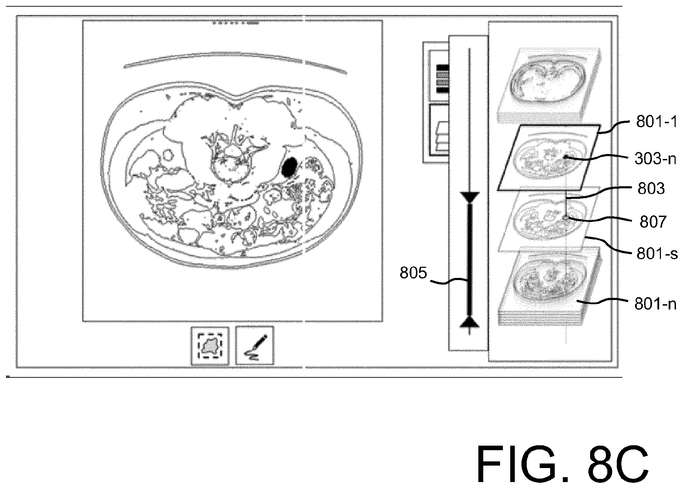

In a further alternative embodiment, the image annotator 119 may be configured to switch to a semi-automatic annotation process, based on user input to assist the system with determination of the mask propagation location in the target slice(s). Figure 7 is a flow diagram of an exemplary process to semi-automatically propagate an object's mask to other slices in the volumetric medical image data, for example in the event that the image annotator 119 cannot recognise and identify the object as discussed above at step S4-5 of Figure 4. Reference is also made to Figure 8, which comprises Figures 8A to 8C, schematically illustrating further exemplary display screens output by the image annotator 119 according to the present embodiment.

As shown, at step S7-1, the image annotator 119 displays a sequence of slice images as an interactive 3D stack 501-2, for example as shown in Figure 8A. The individual slices in the interactive 3D stack 501-2 may be displayed with dynamic spacing therebetween responsive to user selection and/or interaction with the slices. For example, as shown in Figure 8A, the display spacing between an initial, currently selected, slice 801-1 and the subsequent two slices may be greater than the spacing between the remaining slices, in order to maintain sufficient visibility of the slice images of likely interest to the user.

The image annotator 119 may provide several input methods for the user to navigate through the stack 501-2. In the present embodiment, the image annotator 119 is configured to receive, at step S7-3, user input via the user interface 103 to define a scribble path or line (e.g. freely drawn input between two points) through the slice images in the stack 501-2. The user input line 803 identifies one or more scribble slices 801-s in the remaining sequence of slice images, where the intersection of the line 803 and each scribble slice 801-s determines a respective seed area 807 for propagation of the seed object mask 307-n. As shown in the example of Figure 8A, from an initial slice 801-1, the user can extrude a line 803 starting from a location within the mask 307-n of the seed object in the initial slice 801-1, in a direction towards (upward or downward) a neighbouring slice. Figure 8B shows another exemplary display screen, schematically illustrating how the user may continue to extend the line 803, in 3D space, sequentially through a selected range of subsequent (non-annotated) slices, defining the range of scribble slices 801-s for the image annotator 119 to automatically propagate the seed object mask 307-n.

Another exemplary implementation is schematically illustrated in Figure 8C, where the image annotator 119 is configured to receive user input indicating the starting point of the scribbling line in the initial slice 801-1, and subsequent user input indicating the ending point in an ending slice 801-n of a user-defined range, selected using a two-anchor selection slider element 805 for example. The image annotator 119 may be configured to subsequently determine and display the line 803 connecting the user defined starting point, passing through and intersecting with the range of scribble slices 801-s, to the user defined ending point, thereby substantially speeding up and enhancing accuracy of the scribbling input process.

The image annotator 119 will then automatically generate respective seed areas 807 based on the determined intersection points between the scribbling line 803 and each scribble slice 801-s in the selected range of slices. Accordingly, at step S7-5, the image annotator 119 selects the next scribble slice in the scribbled range of slices, this being the first scribble slice in the scribbled range determined at step S7-3 the first time the process is executed. At step S7-7, the image annotator 119 determines a seed area 807 of the current scribble slice based on the calculated intersection point between the defined line 801 with the current selected scribble slice. The intersection point may be used as the centre of the defined seed area 807. The seed area 807 can have any defined shape, such as a circle, a square, a rectangle or a free-form shape such as the shape of the seed object's mask 307-n in the initial slice 801-1.

A seed area 807 might be located entirely within the area of the corresponding object's scan or might cover both a part of the object's scan and the image parts outside the object boundary. The image annotator 119 may base on the visual characteristics of the object's scan bounded by the already-created masks to determine which part covered by a seed area belongs to the object's scan and which part does not. In one exemplary implementation, the image annotator 119 may combine the visual characteristics of the object's mask in the current slice with the visual information within the seed areas 807 in the user-defined scribble slices 801-s, in order to determine the corresponding fine-grained mask of the seed object instance in the respective scribble slices 801-s. The image annotator 119 may determine the visual similarities, such as colour distributions, detected edges, contrasts, key/feature points, and the like, between the image data of the object in different slices, to estimate the boundaries of the seed object from image data in neighbouring slices. To reduce erroneous propagation of the mask as well as the performance time, in the neighbouring slices, the image annotator 119 may be configured to search for the object's mask in an area proximal to the mask in the current slice.

Accordingly, at step S7-9, the image annotator 119 may initiate a new annotation mask of the seed object instance in the current scribble slice, based on the overlapping parts of the seed object mask 307-n from the preceding slice in the range (e.g. the initial slice 801-1 the first time the semi-automatic annotation process is executed) that are covered by the seed area 807 determined at step S7-7. At step S7-11 the image annotator 119 may extract, for example using the object feature extractor 115, visual features of the seed object from image data within the seed object's masked region of the preceding slice in the defined range. At step S7-13, the image annotator 119 may modify the new object annotation mask by propagating the overlapping parts to adjacent areas in the current scribble slice 801-s. For example, the image annotator 119 may implement a trained model or algorithm to propagate the mask to adjacent areas in the slice based on defined and/or machine-learned criteria of spatial proximity and visual similarity. The mask boundary may be automatically expanded from the seed area to adjacent pixels using a flood-filling algorithm, based on the pixel colour values in the seed area. As an example the average/median and standard deviation colors of all the pixels in the seed area may be initially computed. Then, with each pixel in the seed area, the system may consider adjacent candidate pixels which have not yet been considered for inclusion in the seed area. For each adjacent candidate pixel, the system may add the pixel to the seed area, if it is determined that the pixel colour value falls within a range defined by the computed average/median and standard deviation colour. The flood-fill process may be repeated until the seed area is determined to reach adjacent pixels having colour values that are disruptively different (i.e. colour values fall outside the colour range of the seed area). Such colour values are typically representative of the areas outside the object of interest where their visual appearances are often significantly different from the object. The area covered by the new seed area may define the mask of the object.

At step S7-15, the image annotator 119 may store the modified annotation mask of the seed object instance as annotation information 129 in memory 111. A generic object label may be included as the seed object has not been identified by the system 101 in this case. Alternatively, after the user is satisfied with the generated masks, the image annotator 119 may be configured to receive input, for example via the user interface 103, of the corresponding label for the seed object and associated masks. Optionally, the system 101 may be configured to re-train the object identifier 117 in response to user input labelling in order to recognize the new object in future. For example, the object detector 113 may be configured to train the associated machine-learning model or algorithm based on extracted visual appearance characteristics of the seed object from image data in each slice as well as the adjacency relationship between the slices.

At step S7-17, the image annotator 119 determines if there is another scribble slice 801-s in the range to process, and processing returns to step S7-5 to select the next scribble slice 303-s, until all of the scribble slices determined from step S7-3 have been processed and the corresponding annotation data 129 updated in memory 111. In this way, the image annotator 119 is configured to implement more efficient searching for area or region of a slice image containing an instance of the seed object, as the user interface 103 provides the user with a tool to flexibly scribble through the 3D stack 501-2 of the scanning slice images and to quickly indicate seed areas 807 of the object in the slice images.

In another exemplary implementation, the image annotator 119 may determine a seed area 807 based on the intersection point between the scribble path 803 and the selected scribble slice 801-s. The object annotation mask may be determined based on the image data in the seed area 807, for example using object detector 113 as discussed above.

The image annotator 119 may also be configured to determine and output a confidence score of each generated mask on the interface 103, for example using the confidence score calculator 133 as discussed in the embodiment above, whereby the user can quickly identify slices that may need manual correction/adjustment of the automatically generated object masks. Likewise, as also discussed in the embodiment above, when an auto-generated mask is corrected by the user, corresponding masks in the subsequent slices of the selected range may also be automatically updated by the image annotator 119, taking into account the visual characteristics of the corrected mask.

### Example Computer System Implementation

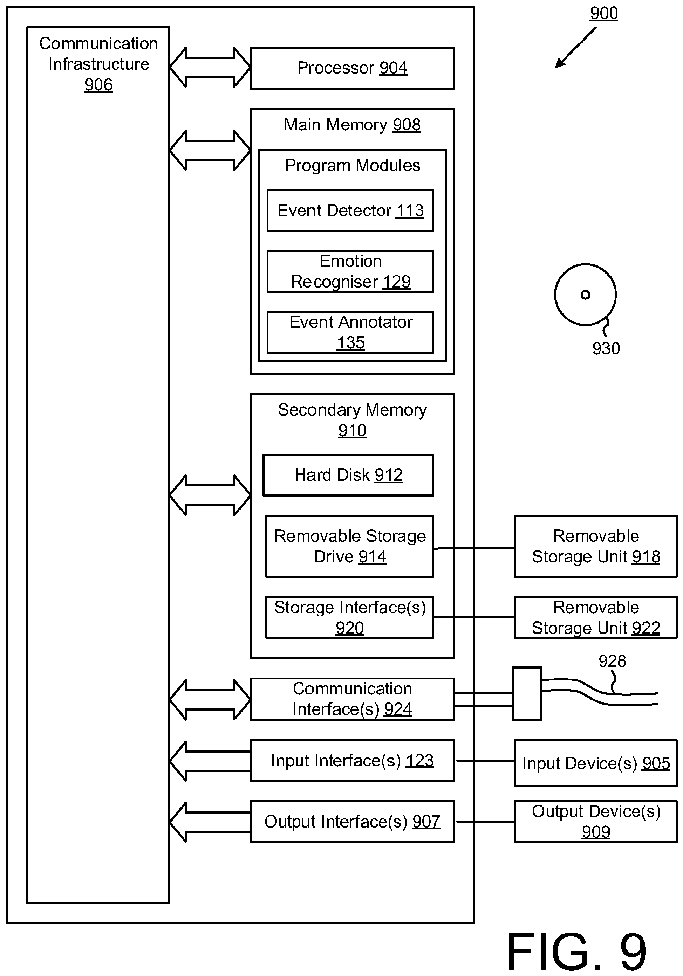

Figure 9 illustrates an example computer system 900 in which the present invention, or portions thereof, can be implemented as computer-readable code to program processing components of the computer system 900. Various embodiments of the invention are described in terms of this example computer system 900. For example, the system 101 of Figure 1 can each be implemented in system 900. The methods illustrated by the flowcharts of Figures 2, 4 and 7 can also be implemented in system 900. After reading this description, it will become apparent to a person skilled in the relevant art how to implement the invention using other computer systems and/or computer architectures.

Computer system 900 includes one or more processors, such as processor 904. Processor 904 can be a special purpose or a general-purpose processor. Processor 904 is connected to a communication infrastructure 906 (for example, a bus, or network). Computer system 900 also includes a user input interface 903 connected to one or more input device(s) 905 and a display interface 907 connected to one or more output devices 909, such as a display, which may be integrated input and display components. Input devices 905 may include, for example, a connected device such as a mouse or touchpad, a keyboard, a touchscreen such as a resistive or capacitive touchscreen, etc.

Computer system 900 also includes a main memory 908, preferably random access memory (RAM), and may also include a secondary memory 910. Secondary memory 910 may include, for example, a hard disk drive 912, a removable storage drive 914, flash memory, a memory stick, and/or any similar non-volatile storage mechanism. Removable storage drive 914 may comprise a floppy disk drive, a magnetic tape drive, an optical disk drive, a flash memory, or the like. The removable storage drive 914 reads from and/or writes to a removable storage unit 918 in a well-known manner. Removable storage unit 918 may comprise a floppy disk, magnetic tape, optical disk, etc. which is read by and written to by removable storage drive 914. As will be appreciated by persons skilled in the relevant art(s), removable storage unit 918 includes a non-transitory computer usable storage medium having stored therein computer software and/or data.

In alternative implementations, secondary memory 910 may include other similar means for allowing computer programs or other instructions to be loaded into computer system 900. Such means may include, for example, a removable storage unit 922 and an interface 920. Examples of such means may include a program cartridge and cartridge interface (such as that found in video game devices), a removable memory chip (such as an EPROM, or PROM) and associated socket, and other removable storage units 922 and interfaces 920 which allow software and data to be transferred from the removable storage unit 922 to computer system 900.

Computer system 900 may also include a communications interface 924 implemented for example at the operating system level to allow data to be transferred between computer system 900 and external devices, for example as signals 928 over a communication channel 926. Communications interface 924 may include a modem, a network interface (such as an Ethernet card), a communications port, a PCMCIA slot and card, or the like.

Various aspects of the present invention, such as the object detector 113 and image annotator 119 program modules, can be implemented by software and/or firmware (also called computer programs, instructions or computer control logic) to program programmable hardware, or hardware including special-purpose hardwired circuits such as application-specific integrated circuits (ASICs), programmable logic devices (PLDs), field-programmable gate arrays (FPGAs), etc. of the computer system 900, or a combination thereof. Computer programs for use in implementing the techniques introduced here may be stored on a machine-readable storage medium and may be executed by one or more general-purpose or special-purpose programmable microprocessors. The terms "computer program medium", "non-transitory computer readable medium" and "computer usable medium" introduced herein can generally refer to media such as removable storage unit 918, removable storage unit 922, and a hard disk installed in hard disk drive 912. Computer program medium, computer readable storage medium, and computer usable medium can also refer to memories, such as main memory 908 and secondary memory 910, which can be memory semiconductors (e.g. DRAMs, etc.). These computer program products are means for providing software to computer system 900.

Computer programs are stored in main memory 908 and/or secondary memory 910. Computer programs may also be received via communications interface 924. Such computer programs, when executed, enable computer system 900 to implement the present invention as described herein. In particular, the computer programs, when executed, enable processor 904 to implement the processes of embodiments of the present invention as described above. Accordingly, such computer programs represent controllers of the computer system 900. Where the invention is implemented using software, the software may be stored in a computer program product and loaded into computer system 900 using removable storage drive 914, interface 920, hard drive 912, or communications interface 924.

### Alternative Embodiments

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

For example, a predicted region of interest may be used for visually emphasizing/highlighting the object of interest. An exemplary visualization technique can be modified to exploit the region of interest, by keeping only the image content within and on the boundary of the mask visible at normal opacity, while reducing the opacity of the rest on the image. This may be particularly effective when the user needs to view and inspect multiple or even all the scanning images in the volume. When viewing or inspecting multiple scanning images, the system can display the images as a 3D stack of scanning slices, then apply the aforementioned dynamic opacity setting to highlight only the object of interest in the slices, hiding irrelevant information in the images to reduce cluttering. Based on this visualization, the user can quickly inspect the changes of the object's boundaries throughout the slices to coarsely detect any anomaly for further examination later.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as an "engine", a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Aspects of the present disclosure are described above with reference to flowchart and/or block diagrams of methods, apparatus (systems) and computer program products according to embodiments of the disclosure. It will be understood that each block of the flowchart and/or block diagrams, and combinations of blocks in the flowchart and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks of the flowchart diagrams may occur out of the order noted in the figures. For example, two blocks shown in succession may, in fact, be executed substantially concurrently, or the blocks may sometimes be executed in the reverse order, depending upon the functionality involved. It will also be noted that each block of the flowchart diagrams, and combinations of blocks in the flowchart diagrams, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for determining a region of interest within slices of medical volumetric image data (109), the method comprising:
acquiring medical volumetric image data (109) including a sequence of slice images (303) and information defining relative positional information (309) therebetween;
determining feature values (311) of an input slice (303-1) of the medical volumetric image data (109), based on image data (305) of the input slice (303-1) and positional information (309) to one or more neighbouring slices (303-2, 303-2) relative to the input slice (303-1);
applying the determined feature values (311) to a trained machine learning model (123) to generate an output indicative of a predicted region of interest in the, or each, neighbouring slice (303-2, 303-3) relative to the input slice (303-1);
generating a prompt (509) to an operator upon predicting a region of interest, and in response to user input;
receiving user input to modify the predicted region of interest; and
re-training the machine learning model (123) based on the modified region of interest.

2. The method of claim 1, wherein the region of interest defines an annotation mask (307) of the visible object in a respective slice image (303).

3. The method of claim 1 or 2, wherein the relative positional information (309) comprises a position of each slice (303-1) in the sequence and/or a distance between each slice (303-1) to a neighbouring slice (303-2, 303-3) in the sequence.

4. The method of any preceding claim, wherein the output of the trained machine learning model (123) indicates a shape of the region of interest in the neighbouring slice (303-2, 303-3).

5. The method of any preceding claim, wherein the neighbouring slices (303-2, 303-3) are forward and/or backward in the sequence relative to the input slice (303-1).

6. The method of any preceding claim, further comprising detecting a visible object in the input slice (303-1), and retrieving a trained machine learning model (123) corresponding to the detected visible object.

7. The method of any preceding claim, wherein the trained machine learning model (123) generates a further output indicative of the region of interest in the input slice (303-1).

8. The method of any preceding claim, further comprising automatically annotating the volumetric medical image data (109) based on the output of the trained machine learning model (123).

9. The method of any preceding claim, further comprising determining a confidence value of the predicted region of interest.

10. The method of any preceding claim, further comprising determining a plurality of target slices of the medical volumetric image data (109), and applying feature values (311) of each target slice to the trained machine learning model (123) to generate respective outputs indicative of a predicted region of interest in the, or each, neighbouring slice relative to the respective target slice.

11. A system (101) comprising means configured to carry out the steps of the method of any one of claims 1 to 10.

12. A computer-readable storage medium comprising instructions which, when executed by a computer, cause the computer to carry out the method of any one of claims 1 to 10.

## Patentansprüche

1. Computerimplementiertes Verfahren zum Bestimmen einer Region von Interesse innerhalb von Schichten medizinischer volumetrischer Bilddaten (109), wobei das Verfahren Folgendes beinhaltet:
Erfassen medizinischer volumetrischer Bilddaten (109) einschließlich einer Sequenz von Schichtbildern (303) und Informationen, die relative Positionsinformationen (309) dazwischen definieren;
Bestimmen von Merkmalswerten (311) einer Eingangsschicht (303-1) der medizinischen volumetrischen Bilddaten (109) auf der Basis von Bilddaten (305) der Eingangsschicht (303-1) und Positionsinformationen (309) zu einer oder mehreren benachbarten Schichten (303-2, 303-2) relativ zur Eingangsschicht (303-1);
Anwenden der bestimmten Merkmalswerte (311) auf ein trainiertes Machine-Learning-Modell (123), um einen Ausgang zu erzeugen, der eine vorhergesagte Region von Interesse in der oder jeder benachbarten Schicht (303-2, 303-3) relativ zur Eingangsschicht (303-1) angibt;
Erzeugen einer Aufforderung (509) an einen Bediener nach der Vorhersage einer Region von Interesse und als Reaktion auf eine Benutzereingabe;
Empfangen einer Benutzereingabe zum Modifizieren der vorhergesagten Region von Interesse; und
erneutes Trainieren des Machine-Learning-Modells (123) auf der Basis der modifizierten Region von Interesse.

2. Verfahren nach Anspruch 1, wobei die Region von Interesse eine Annotationsmaske (307) des sichtbaren Objekts in einem jeweiligen Schichtbild (303) definiert.

3. Verfahren nach Anspruch 1 oder 2, wobei die relativen Positionsinformationen (309) eine Position jeder Schicht (303-1) in der Sequenz und/oder einen Abstand zwischen jeder Schicht (303-1) und einer benachbarten Schicht (303-2, 303-3) in der Sequenz umfassen.

4. Verfahren nach einem vorherigen Anspruch, wobei der Ausgang des trainierten Machine-Learning-Modells (123) eine Form der Region von Interesse in der benachbarten Schicht (303-2, 303-3) angibt.

5. Verfahren nach einem vorherigen Anspruch, wobei die benachbarten Schichten (303-2, 303-3) in der Sequenz relativ zur Eingangsschicht (303-1) davor und/oder dahinter liegen.

6. Verfahren nach einem vorherigen Anspruch, das ferner das Erkennen eines sichtbaren Objekts in der Eingangsschicht (303-1) und das Abrufen eines trainierten Machine-Learning-Modells (123) beinhaltet, das dem erkannten sichtbaren Objekt entspricht.

7. Verfahren nach einem vorherigen Anspruch, wobei das trainierte Machine-Learning-Mdell (123) einen weiteren Ausgang erzeugt, der die Region von Interesse in der Eingangsschicht (303-1) angibt.

8. Verfahren nach einem vorherigen Anspruch, das ferner das automatische Annotieren der volumetrischen medizinischen Bilddaten (109) auf der Basis des Ausgangs des trainierten Machine-Learning-Modells (123) beinhaltet.

9. Verfahren nach einem vorherigen Anspruch, das ferner das Bestimmen eines Konfidenzwerts der vorhergesagten Region von Interesse beinhaltet.

10. Verfahren nach einem vorherigen Anspruch, das ferner das Bestimmen mehrerer Zielschichten der medizinischen volumetrischen Bilddaten (109) und das Anwenden von Merkmalswerten (311) jeder Zielschicht auf das trainierte Machine-Learning-Modell (123) beinhaltet, um jeweilige Ausgänge zu erzeugen, die eine vorhergesagte Region von Interesse in der oder jeder benachbarten Schicht relativ zur jeweiligen Zielschicht anzeigen.

11. System (101), das Mittel umfasst, die zum Durchführen der Schritte des Verfahrens nach einem der Ansprüche 1 bis 10 konfiguriert sind.

12. Computerlesbares Speichermedium, das Befehle umfasst, die bei Ausführung durch einen Computer den Computer zum Durchführen des Verfahrens nach einem der Ansprüche 1 bis 10 veranlassen.

## Revendications

1. Procédé mis en œuvre par ordinateur permettant de déterminer une région d'intérêt dans des tranches de données d'images volumétriques médicales (109), le procédé comprenant les étapes consistant à :
acquérir des données d'images volumétriques médicales (109) comprenant une séquence d'images en tranche (303) et des informations définissant des informations de position relative (309) entre celles-ci ;
déterminer des valeurs de caractéristiques (311) d'une tranche d'entrée (303-1) des données d'images volumétriques médicales (109), sur la base de données d'images (305) de la tranche d'entrée (303-1) et d'informations de position (309) par rapport à une ou plusieurs tranches voisines (303-2, 303-2) par rapport à la tranche d'entrée (303-1) ;
appliquer les valeurs de caractéristiques (311) déterminées à un modèle d'apprentissage automatique formé (123) pour générer une sortie indiquant une région d'intérêt prédite dans la ou chaque tranche voisine (303-2, 303-3) par rapport à la tranche d'entrée (303-1) ;
générer une invite (509) à un opérateur lors de la prédiction d'une région d'intérêt et en réponse à une entrée d'utilisateur ;
recevoir une entrée d'utilisateur pour modifier la région d'intérêt prédite ; et
reformer le modèle d'apprentissage automatique (123) sur la base de la région d'intérêt modifiée.

2. Procédé selon la revendication 1, la région d'intérêt définissant un masque d'annotation (307) de l'objet visible sur une image en tranche (303) respective.

3. Procédé selon la revendication 1 ou 2, les informations de position relative (309) comprenant une position de chaque tranche (303-1) dans la séquence et/ou une distance entre chaque tranche (303-1) et une tranche voisine (303-2, 303-3) dans la séquence.

4. Procédé selon l'une quelconque des revendications précédentes, la sortie du modèle d'apprentissage automatique formé (123) indiquant une forme de la région d'intérêt dans la tranche voisine (303-2, 303-3).

5. Procédé selon l'une quelconque des revendications précédentes, les tranches voisines (303-2, 303-3) étant en avant et/ou en arrière dans la séquence par rapport à la tranche d'entrée (303-1).

6. Procédé selon l'une quelconque des revendications précédentes, comprenant en outre les étapes consistant à détecter un objet visible dans la tranche d'entrée (303-1) et à récupérer un modèle d'apprentissage automatique formé (123) correspondant à l'objet visible détecté.

7. Procédé selon l'une quelconque des revendications précédentes, le modèle d'apprentissage automatique formé (123) générant une sortie supplémentaire indiquant la région d'intérêt dans la tranche d'entrée (303-1).

8. Procédé selon l'une quelconque des revendications précédentes, comprenant en outre l'étape consistant à annoter automatiquement les données d'images médicales volumétriques (109) sur la base de la sortie du modèle d'apprentissage automatique formé (123).

9. Procédé selon l'une quelconque des revendications précédentes, comprenant en outre l'étape consistant à déterminer une valeur de confiance de la région d'intérêt prédite.

10. Procédé selon l'une quelconque des revendications précédentes, comprenant en outre les étapes consistant à déterminer une pluralité de tranches cibles des données d'images volumétriques médicales (109) et à appliquer des valeurs de caractéristiques (311) de chaque tranche cible au modèle d'apprentissage automatique formé (123) pour générer des sorties respectives indiquant une région d'intérêt prédite dans la ou chaque tranche voisine par rapport à la tranche cible respective.

11. Système (101) comprenant un moyen configuré pour réaliser les étapes du procédé selon l'une quelconque des revendications 1 à 10.

12. Support de stockage lisible par ordinateur comprenant des instructions qui, lorsqu'elles sont exécutées par un ordinateur, amènent l'ordinateur à réaliser le procédé selon l'une quelconque des revendications 1 à 10.
